# EUROPÄISCHE PATENTANMELDUNG

(11) **EP 3 246 897 A1**
(43) Veröffentlichungstag der Anmeldung: **22.11.2017**
(21) Anmeldenummer: 16170219.6
(22) Anmeldetag: 18.05.2016
(51) Int. Cl.: G09B 9/04, G06F 3/01, A63F 13/25

(54) **VORRICHTUNG UND VERFAHREN ZUR SIMULATION VON BESCHLEUNIGUNGSKRÄFTEN**

(71) Anmelder: Keul, Christian K., 80805 München (DE)
(72) Erfinder: Keul, Christian K., 80805 München (DE)
(74) Vertreter: 2s-ip Schramm Schneider Bertagnoll Patent- und Rechtsanwälte Part mbB

(57) **Zusammenfassung**

Vorrichtung (1) zur Simulation von am menschlichen Kopf (K) wirkenden Beschleunigungskräften (g), die Vorrichtung (1) enthält: eine Basiseinheit (10), die am Kopf anordenbar ist, ein Gewichtssystem (20), das an der Basiseinheit (10) angeordnet ist, und eine Sensoreinrichtung (S), die angepasst ist einen Drehwinkel (α) des Kopfes (K) oder der Basiseinheit (10) relativ zu einer Normalposition des Kopfes oder der Basiseinheit zu detektieren, wobei das Gewichtssystem (20) einen Körper (21) aufweist, der in Abhängigkeit des Drehwinkels (α) relativ zur Basiseinheit (10) verlagerbar ist. Bereit gestellt wird ferner ein entsprechend ausgestaltetes Verfahren, um von am menschlichen Kopf (K) wirkenden Beschleunigungskräften (g) zu simulieren, insbesondere unter Verwendung einer erfindungsgemäßen Vorrichtung (1).

## Beschreibung

### Gegenstand der Erfindung

Die Erfindung betrifft eine Vorrichtung zur Simulation von am menschlichen Kopf wirkenden Beschleunigungskräften sowie ein Verfahren zur Simulation solcher Beschleunigungskräfte.

### Hintergrund der Erfindung

Als Beschleunigungskräfte - auch als g-Kräfte bezeichnet - werden Belastungen genannt, die aufgrund einer Änderung von Größe und/oder Richtung der Geschwindigkeit auf den menschlichen Körper (oder einen anderen Gegenstand) einwirken. Die auf den Kopf wirkende Beschleunigungskraft ist also jene Kraft, die aufgrund der Trägheit des Kopfes entgegen der Beschleunigungsrichtung des Kopfes wirkt.

Hohe Beschleunigungskräfte bzw. g-Kräfte treten beispielsweise bei Fahrten mit einer Achterbahn auf. Ferner treten auch bei einem Beschleunigungsvorgang, bei einem Bremsvorgang oder bei einer Kurvenfahrt mit einem Fahrzeug Beschleunigungskräfte bzw. g-Kräfte auf, die auf den menschlichen Körper einwirken und die abhängig von der Änderungsrate der Beschleunigung sehr groß sein können. Sehr großen g-Kräften sind beispielsweise Rennfahrer, etwa F1-Rennfahrer ausgesetzt.

Wünschenswert ist es, im Bereich der Computerspiele, etwa bei Rennsimulationen auch die auf den menschlichen Körper bzw. auf den Kopf wirkenden g-Kräfte zu simulieren, um dem Spieler ein noch realistischeres Fahrerlebnis zu vermitteln. Ferner ist es wünschenswert, eine realistische Simulation von auf den Körper bzw. auf den Kopf wirkenden Beschleunigungskräften auch für "echte" Rennsimulatoren bereitzustellen, in denen professionelle Rennfahrer aber auch Nicht-Rennfahrer ein Rennen auf einer bestimmten Rennstrecke simulieren können.

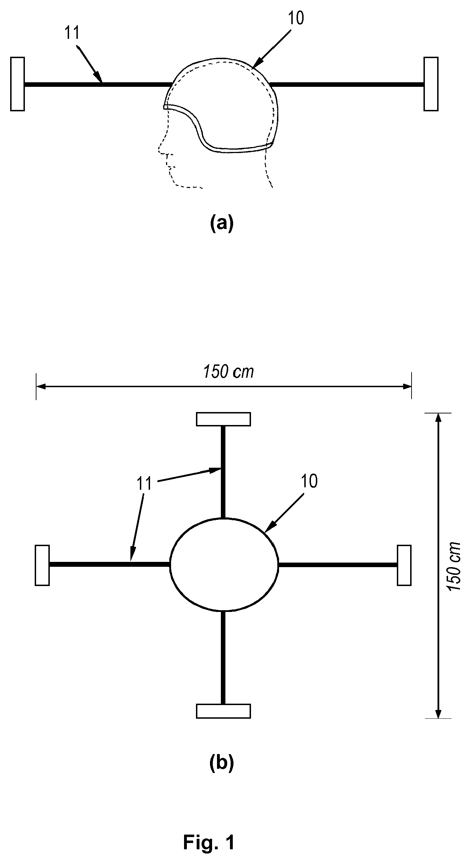

Aus dem Stand der Technik sind Einrichtungen zur Simulation von auf den menschlichen Kopf wirkenden Beschleunigungskräften bekannt. Eine solche aus dem Stand der Technik bekannte Vorrichtung ist in Fig. 1 gezeigt. Diese Vorrichtung besteht im Wesentlichen aus einem Helm 10, an dem mindestens ein, vorzugsweise mindestens vier Zugelemente oder hydraulische Elemente 11 angeordnet sind. Die Zugelemente bzw. hydraulischen Elemente 11 sind einerseits mit dem Helm 10 und andererseits mit einem ortsfesten Gestell verbunden. Mittels der Zugelemente bzw. hydraulischen Elemente 11 kann der Helm 10 und damit der Kopf zweidimensional in eine beliebige Richtung bewegt werden, wodurch das Einwirken einer Beschleunigungskraft auf dem Kopf simuliert werden soll.

Diese aus dem Stand der Technik bekannte Vorrichtung hat allerdings den Nachteil, dass sie relativ große Abmessungen, beispielsweise eine Breite und eine Tiefe von etwa 150 cm, aufweist. Für den Hausgebrauch ist daher diese Vorrichtung nicht praktikabel und wird deshalb nahezu ausschließlich von professionellen Rennfahrern zu Trainingszwecken verwendet.

Ein weiterer Nachteil liegt darin, dass durch die an dem Helm 10 angeordneten Zugelemente bzw. hydraulischen Elemente 11 die natürliche Bewegungsfreiheit des Kopfes stark eingeschränkt ist. Ein Drehen des Kopfes ist meist nur unter großem Kraftaufwand möglich. Die eingeschränkte Bewegungsfreiheit des Kopfes wirkt sich nachteilig auf die Simulation aus, die möglichst realistisch sein soll. Ferner kann auch das Sichtfeld eingeschränkt sein.

### Aufgabe der Erfindung

Aufgabe der vorliegenden Erfindung ist es daher, eine Vorrichtung zur Simulation von Beschleunigungskräften, die auf den menschlichen Körper bzw. auf den menschlichen Kopf wirken, bereitzustellen, die die aus dem Stand der Technik bekannten Nachteile zumindest teilweise vermeidet und die einerseits platzsparend ist, um auch im Heimgebrauch verwendet werden zu können, und die andererseits die natürliche Bewegungsfreiheit des Kopfes und das Sichtfeld nicht einschränkt und bei Bedarf auch für ein Training der Hals und Nackenmuskulatur verwendet werden kann.

### Erfindungsgemäße Lösung

Erfindungsgemäß wird diese Aufgabe mit einer Vorrichtung zur Simulation von am menschlichen Kopf wirkenden Beschleunigungskräften sowie ein Verfahren zur Simulation dieser Beschleunigungskräfte nach den unabhängigen Ansprüchen gelöst. Vorteilhafte Ausgestaltungen der Erfindung sind in den jeweiligen abhängigen Ansprüchen angegeben.

Bereitgestellt wird demnach eine Vorrichtung zur Simulation von am menschlichen Kopf wirkenden Beschleunigungskräften, wobei die Vorrichtung aufweist
- eine Basiseinheit, die am Kopf anordenbar ist,
- ein Gewichtssystem, das an der Basiseinheit angeordnet ist, und
- eine Sensoreinrichtung, die angepasst ist einen Drehwinkel des Kopfes oder der Basiseinheit relativ zu einer Normalposition des Kopfes oder der Basiseinheit zu detektieren,
wobei das Gewichtssystem einen Körper aufweist, der in Abhängigkeit des Drehwinkels (α) relativ zur Basiseinheit verlagerbar ist.

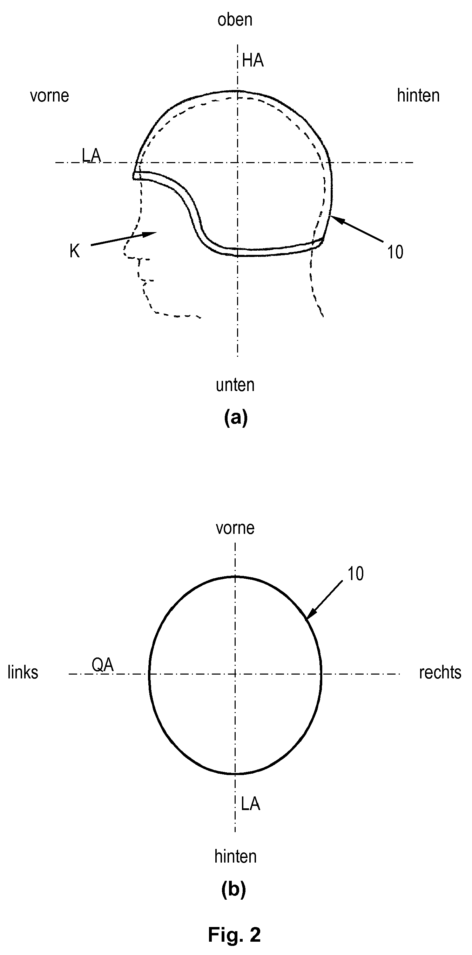

"Normalposition" bedeutet, dass der Kopf bzw. die Basiseinheit bezogen auf den menschlichen Körper nach vorne hin ausgerichtet ist und der Drehwinkel des Kopfes oder der Basiseinheit relativ zu dieser Normalposition 0° beträgt. Wird der Kopf und damit die Basiseinheit nach links oder nach rechts gedreht, d.h., um die Hochachse HA gedreht (siehe Fig. 2), ändert sich der Drehwinkel des Kopfes bzw. der Basiseinheit relativ zu dieser Normalposition, d.h. der Drehwinkel ist größer oder kleiner 0°.

Durch die Verlagerung des Körpers relativ zur Basiseinheit erfolgt eine Gewichtsverlagerung des Körpers relativ zur Basiseinheit, die beim Träger der Basiseinheit ein Gefühl von auf den Kopf wirkenden Beschleunigungskräften hervorruft, je nachdem in welche Richtung der Körper verlagert wird. Wird beispielsweise der Körper in den vorderen Bereich der Basiseinheit hin verlagert, wird eine negative Beschleunigung simuliert, die beispielsweise bei einem Bremsvorgang in einem Fahrzeug entsteht. Demzufolge wirkt auf den Kopf eine nach vorn gerichtete g-Kraft, die den Kopf nach vorne drückt bzw. nach vorne bewegt. Weil der Körper des Gewichtssystems in Abhängigkeit des Drehwinkels des Kopfes oder der Basiseinheit relativ zu einer Normalposition des Kopfes oder der Basiseinheit relativ zur Basiseinheit verlagerbar ist, kann sichergestellt werden, dass die zu simulierende Beschleunigung auch bei einem gedrehten Kopf in die korrekte Richtung wirkt.

Ein Körper des Gewichtssystems umfasst im Sinne der Erfindung
- ein einteilig ausgestaltetes Gewichtselement mit einer vorbestimmten, oder
- ein mehrteilig ausgestaltetes Gewichtselement, das aus mehreren miteinander verbundenen Teilelementen besteht, wobei jedes Teilelement eine andere Masse aufweisen kann, oder
- ein mehrteilig ausgestaltetes Gewichtselement, das aus mehreren nicht miteinander verbundenen Teilelementen besteht, wobei jedes Teilelement eine andere Masse aufweisen kann.

Ein Körper im Sinne der Erfindung kann also z.B. eine einzelne Metallkugel sein. Ebenfalls kann ein Körper im Sinne der Erfindung aus mehreren Metallkugeln bestehen, die miteinander verbunden und somit einen komplexen Körper bilden oder nicht miteinander verbunden sind.

Unabhängig davon, ob ein Körper durch ein einzelnes Gewichtselement oder durch mehrere miteinander verbundene oder nicht miteinander verbundene Teilelemente besteht, weist der Körper als Ganzes einen Massenmittelpunkt. Bei Körpern, die aus mehreren Teilelementen bestehen, kann durch Veränderung der Lage der Teilelemente relativ zueinander der Massenmittelpunkt des Körpers als Ganzes verändert werden.

Vorteilhaft ist es, wenn das Gewichtssystem zumindest eine Antriebseinheit aufweist, die mit dem Körper gekoppelt ist und die angepasst ist, den Körper, insbesondere den Massenmittelpunkt des Körpers, in Abhängigkeit des Drehwinkels relativ zur Basiseinheit zu verlagern.

Vorteilhaft ist es, wenn die zumindest eine Antriebseinheit angepasst ist, den Massenmittelpunkt des Körpers mit einer vorbestimmten Geschwindigkeit und/oder Beschleunigung relativ zur Basiseinheit zu verlagern.

Als Antriebseinheit können beispielsweise ein oder mehrere Servomotoren vorgesehen sein, die auch unterschiedliche Beschleunigungen des relativ zur Basiseinheit zu verlagernden Körpers ermöglichen, sodass unterschiedlich starke Beschleunigungskräfte bzw. g-Kräfte simuliert werden können.

In einer Ausgestaltung der Erfindung kann das Gewichtssystem, d.h. das Gewichtssystem als Ganzes, in Abhängigkeit des Drehwinkels relativ zur Basiseinheit drehbar sein. Dies ist dann vorteilhaft, wenn der Körper des Gewichtssystems nur innerhalb bestimmter Grenzen relativ zur Basiseinheit verlagerbar ist, der von der Sensoreinrichtung detektierte Drehwinkel aber eine Verlagerung des Körpers über diese Grenzen hinaus erforderlich macht, damit die zu simulierende Beschleunigung auch bei einem gedrehten Kopf in die korrekte Richtung wirkt.

Die Basiseinheit kann als Helm, Mütze, Kappe oder sonstige Kopfbedeckung oder als ein an der Kopfoberfläche anliegendes Gestell ausgestaltet sein.

In einer Ausgestaltung der Erfindung kann der Körper ein erstes Gewicht und ein zweites Gewicht aufweisen, wobei das erste Gewicht und das zweite Gewicht unabhängig voneinander relativ zur Basiseinheit verlagerbar sind. Damit kann eine Verlagerung des Massenmittelpunktes des Körpers in jede Richtung relativ zur Basiseinheit realisiert und damit eine Beschleunigungskraft in jede Richtung simuliert werden.

In einer Ausgestaltung der Erfindung können das erste und das zweite Gewicht jeweils als Bügel, vorzugsweise als gebogener Bügel ausgestaltet sein, wobei die Bügel beabstandet zur Basiseinheit außerhalb der Basiseinheit verlaufen, wobei die Bügel jeweils um eine Drehachse relativ zur Basiseinheit bewegbar bzw. schwenkbar sind, wobei die Drehachsen jeweils durch die Bügelenden verlaufen und wobei die Drehachse des ersten Bügels parallel zur Querachse der Basiseinheit und die Drehachse des zweiten Bügels parallel zur Längsachse der Basiseinheit verlaufen.

Die Bügel sind hierbei so angeordnet und ausgestaltet, dass sie sich während einer Schwenkbewegung nicht gegenseitig berühren.

In einer weiteren Ausgestaltung der Erfindung kann der Körper zusätzlich ein drittes Gewicht und ein viertes Gewicht aufweisen, wobei die vier Gewichte, vorzugsweise unabhängig voneinander, relativ zur Basiseinheit bewegbar bzw. verlagerbar sind.

Jedes der vier Gewichte ist um eine im Wesentlichen senkrecht zur Basiseinheit stehenden Drehachse relativ zur Basiseinheit bewegbar bzw. drehbar, wobei
- in einer Neutralstellung das erste Gewichte links von der Drehachse und das zweite Gewicht rechts von der Drehachse angeordnet sind und das erste und zweite Gewicht um die Drehachse gleichzeitig nach vorne oder nach hinten bewegbar sind, und
- in einer Neutralstellung das dritte Gewichte vor der Drehachse und das vierte Gewicht hinter der Drehachse angeordnet sind und das dritte und vierte Gewicht um die Drehachse gleichzeitig nach links oder nach rechts bewegbar sind.

Die vier Gewichte können jeweils die Form eines sphärischen Dreiecks aufweisen, wobei jeweils ein Eckpunkt der sphärischen Dreiecke die Drehachse bildet. Alternativ können die vier Gewichte jeweils auch die Form eines "Hammers" oder dergleichen aufweisen.

Alternativ können die vier Gewichte jeweils eine quader- oder zylinderförmige Form aufweisen, wobei das erste und zweite Gewicht entlang einer ersten Schiene und das dritte und vierte Gewicht entlang einer zweiten Schiene bewegbar sind. Alternativ können die vier Gewichte auch entlang einer Rinne oder entlang eines Kabels bewegbar sein.

Die Form der vier Gewichte kann grundsätzlich beliebig gewählt werden, solange gewährleistet ist, dass sich die vier Gewichte gemäß der Erfindung relativ zu der Basiseinheit verlagern lassen.

In einer Ausgestaltung der Erfindung kann der Körper die Form einer Haube aufweisen, dessen innere Mantelfläche bei einer Neutralstellung der Haube in radialer Richtung einen vorbestimmten Abstand zur Basiseinheit aufweist und innerhalb dieses Abstandes in radialer Richtung relativ zur Basiseinheit bewegbar ist.

In einer weiteren Ausgestaltung der Erfindung kann der Körper ein mit einem Fluid gefülltes flexibles Kissen aufweisen, das derart ausgestaltet ist, dass eine Krafteinwirkung auf die Wandung des Kissens eine Verformung des Kissens und damit eine Verlagerung des Massenmittelpunktes des Kissens relativ zur Basiseinheit bewirkt. Die Krafteinwirkung auf die Wandung des Kissens kann mit der Antriebseinheit bewirkt werden.

Vorteilhaft ist es, wenn die erfindungsgemäße Vorrichtung eine drahtlose oder drahtgebundene Schnittstelle und eine mit der Schnittstelle gekoppelte Steuereinheit aufweist, wobei die Steuereinheit angepasst ist, über die Schnittstelle Steuerbefehle zu empfangen und gemäß der empfangenen Steuerbefehle die Antriebseinheit zu steuern. Damit kann die erfindungsgemäße Vorrichtung beispielsweise mit einem Computerspiel gekoppelt werden, wobei das Computerspiel die Steuerbefehle an die Vorrichtung überträgt. Bei einem Rennspiel können so Steuerbefehle an die Vorrichtung übertragen werden, die die Steuereinheit anweisen eine vorbestimmte Verlagerung des Massenmittelpunktes des Körpers zu veranlassen. Die Steuerbefehle können aber auch von einem an das Computerspiel angeschlossenes Gerät bereitgestellt werden, etwa von einem Lenkrad, einem Gaspedal oder einem Bremspedal.

Des Weiteren wird ein Gewichtssystem bereitgestellt, das einen Körper und eine Antriebseinheit aufweist, wobei der Körper von der Antriebseinheit bewegbar ist. Vorzugsweise ist das Gewichtssystem, vorzugsweise lösbar an einer Basiseinheit anordenbar, wobei der Körper, insbesondere der Massenmittelpunkt des Körpers, in Abhängigkeit eines Drehwinkels der Basiseinheit relativ zu einer Normalposition der Basiseinheit relativ zur Basiseinheit verlagerbar ist.

Bereitgestellt wird ferner ein Verfahren zur Simulation von am menschlichen Körper wirkenden Beschleunigungskräften, wobei der Körpers, insbesondere der Massenmittelpunkt des Körpers, eines Gewichtssystems, das an einer Basiseinheit, die am Kopf anordenbar ist, angeordnet ist, in Abhängigkeit eines Drehwinkels der Basiseinheit oder des Kopfes relativ zu einer Normalposition der Basiseinheit oder des Kopfes relativ zur Basiseinheit verlagert wird.

Vorteilhaft ist es, wenn die Verlagerung des Massenmittelpunktes des Körpers relativ zur Basiseinheit mit einer Antriebseinheit erfolgt, die mit dem Körper gekoppelt ist, wobei mit der Antriebseinheit ein oder mehrere Gewichte des Körpers relativ zur Basiseinheit, vorzugsweise um eine oder mehrere Drehachsen bewegt werden.

Bei dem Verfahren ist es vorteilhaft, wenn in Abhängigkeit des Drehwinkels das Gewichtssystem relativ zur Basiseinheit gedreht wird, vorzugsweise um eine Hochachse des Kopfes bzw. der Basiseinheit.

Die erfindungsgemäße Vorrichtung hat den Vorteil, dass sie einerseits sehr platzsparend ist und als gesamte Einheit am Kopf angeordnet werden kann bzw. auf den Kopf aufgesetzt werden kann und andererseits die natürliche Bewegungsfreiheit des Kopfes nahezu gar nicht negativ beeinflusst.

### Kurzbeschreibung der Figuren

Weitere Einzelheiten und Merkmale der Erfindung sowie weitere Vorteile der Erfindung ergeben sich aus der nachfolgenden Beschreibung in Verbindung mit der Zeichnung. Es zeigt:
- Fig. 1: eine aus dem Stand der Technik bekannte Vorrichtung zur Simulation von Beschleunigungskräften;
- Fig. 2: eine als Helm ausgestaltete Basiseinheit einer erfindungsgemäßen Vorrichtung in einer Seitenansicht und in einer Ansicht von oben;
- Fig. 3: eine erfindungsgemäße Vorrichtung, wobei die Vorrichtung einmal in einer Neutralstellung und einmal in einer Stellung, bei der der Massenmittelpunkt relativ zur Basiseinheit verschoben ist, gezeigt sind;
- Fig. 4: eine alternative Ausgestaltung einer erfindungsgemäßen Vorrichtung mit zwei an der Basiseinheit angeordneten Bügel;
- Fig. 5: eine weitere alternative Ausgestaltung einer erfindungsgemäßen Vorrichtung mit einer an der Basiseinheit angeordneten Haube;
- Fig. 6: eine weitere alternative Ausgestaltung einer erfindungsgemäßen Vorrichtung mit vier an der Basiseinheit angeordneten Gewichten, die als sphärische Dreiecke ausgestaltet sind;
- Fig. 7: eine alternative Ausgestaltung der in Fig. 6 gezeigten erfindungsgemäßen Vorrichtung;
- Fig. 8: eine weitere alternative Ausgestaltung einer erfindungsgemäßen Vorrichtung, wobei an der Basiseinheit vier Gewichtskörper angeordnet sind, die paarweise entlang einer Schiene bewegbar sind; und
- Fig. 9: eine Ausgestaltung einer erfindungsgemäßen Vorrichtung zur Verdeutlichung der Funktionsweise, bei der der Drehwinkel des Kopfes bzw. der Basiseinheit berücksichtigt wird.

### Detaillierte Beschreibung der Erfindung

Die erfindungsgemäße Vorrichtung zur Simulation von am menschlichen Kopf wirkenden Beschleunigungskräften bzw. g-Kräften besteht im Wesentlichen aus einer Basiseinheit, die am Kopf angeordnet werden kann, und aus einem Gewichtssystem, das auf oder an der Basiseinheit angeordnet ist. Ferner umfasst die Vorrichtung eine Sensoreinrichtung, mit der ein Drehwinkel des Kopfes oder der Basiseinheit relativ zu einer Normalposition des Kopfes oder der Basiseinheit detektiert werden kann.

Das Gewichtssystem weist hierbei einen Körper auf, der relativ zur Basiseinheit verlagerbar ist, wobei durch die Verlagerung des Körpers eine Gewichtsverlagerung des Körpers relativ zur Basiseinheit erfolgt. Diese Gewichtsverlagerung erzeugt hierbei die Beschleunigungskräfte bzw. g-Kräfte, was dazu führt, dass der Kopf des Trägers der Vorrichtung in eine bestimmte Richtung - je nachdem in welche Richtung der Massenmittelpunkt relativ zur Basiseinheit verlagert wird - bewegt wird und damit der Kopf einer Beschleunigung in diese Richtung ausgesetzt wird. Vorteilhaft ist es, wenn durch die Verlagerung des Körpers der Massenmittelpunkt des Körpers relativ zur Basiseinheit verlagert wird. Damit werden g-Kräfte simuliert, die beispielsweise bei einer Kurvenfahrt auftreten.

Damit auch bei einem gedrehten Kopf die simulierten g-Kräfte in die korrekte Richtung wirken, ist es erfindungsgemäß vorgesehen, dass die Verlagerung des Massenmittelpunktes des Körpers relativ zur Basiseinheit in Abhängigkeit von dem Drehwinkel des Kopfes erfolgt, wobei der Drehwinkel von der Sensoreinrichtung ermittelt bzw. detektiert wird.

Die erfindungsgemäße Vorrichtung kann über eine Schnittstelle, die drahtgebunden oder drahtlos ausgestaltet sein kann, mit einem Computer oder mit einem Rennsimulator gekoppelt sein. Über diese Schnittstelle kann beispielsweise der Rennsimulator die erfindungsgemäße Vorrichtung steuern, d.h. die Vorrichtung mittels Steuerbefehle dazu veranlassen, den Massenmittelpunkt des Körpers in eine bestimmte Richtung und mit einer bestimmten Beschleunigung relativ zur Basiseinheit zu verlagern. Fährt der Fahrer in dem Rennsimulator beispielsweise in eine Rechtskurve kann der Rennsimulator die erfindungsgemäße Vorrichtung veranlassen, den Massenmittelpunkt des Körpers in den Bereich der linken Hemisphäre des Kopfes zu verlagern. Dadurch wird eine in Richtung zum Kurvenäußeren wirkende g-Kraft simuliert, die auf den Kopf des Fahrers wirkt.

Wird das Fahrzeug in dem Rennsimulator beispielsweise beschleunigt, kann der Massenmittelpunkt des Körpers in den Bereich der hinteren Hemisphäre des Kopfes verlagert werden, sodass der Kopf nach hinten bewegt wird. Umgekehrt kann bei einem Bremsvorgang in dem Rennsimulator der Massenmittelpunkt des Körpers in den Bereich der vorderen Hemisphäre des Kopfes verlagert werden, sodass der Kopf nach vorne bewegt wird.

Über die zuvor genannte Schnittstelle können der erfindungsgemäßen Vorrichtung auch Daten zugeführt werden, die eine Information über den Drehwinkel des Kopfes oder der Basiseinheit umfassen. Diese Information können dann bei der Verlagerung des Massenmittelpunktes des Körpers berücksichtigt werden. Fährt der Fahrer in dem Rennsimulator beispielsweise in eine Rechtskurve und dreht der Fahrer hierbei den Kopf nach links kann die erfindungsgemäße Vorrichtung veranlasst werden, den Massenmittelpunkt des Körpers so relativ zur Basiseinheit zu verlagern, dass eine in Richtung zum Kurvenäußeren wirkende g-Kraft simuliert wird. Ohne Berücksichtigung des Drehwinkels würde bei einem gedrehten Kopf zwar auch eine g-Kraft simuliert werden, der Kraftvektor würde aber in die falsche Richtung zeigen.

Die Information über den Drehwinkel kann von der vorstehend genannten Sensoreinrichtung bereitgestellt werden. Die Sensoreinrichtung kann beispielsweise so ausgestaltet sein, dass sie von außen berührungslos die Drehbewegungen des Kopfes bzw. der Basiseinheit detektieren kann, etwa anhand von an der Basiseinheit angeordneten Markern. Grundsätzlich eignet sich als Sensoreinrichtung jede Art von Sensorsystem, mit dem eine Drehbewegung des Kopfes oder der Basiseinheit detektiert werden kann. Die Sensoreinrichtung kann auch an der erfindungsgemäß Vorrichtung angeordnet sein. In einer Ausgestaltung der Erfindung kann die Information über den Drehwinkel auch von einer sogenannten VR-Brille (Virtual-Reality Brille) bereitgestellt werden, wobei in diesem Fall die VR-Brille selbst die Sensoreinrichtung gemäß der vorliegenden Erfindung ist.

Die erfindungsgemäße Vorrichtung kann nicht nur für Computerspiele bzw. Rennsimulatoren eingesetzt bzw. verwendet werden, um darin auf den menschlichen Kopf wirkende Beschleunigungskräfte zu simulieren. Verwendet werden kann die Vorrichtung beispielsweise auch in Panzersimulatoren oder Flugsimulatoren im militärischen Bereich oder in sogenannten virtuellen Umgebungen.

Des Weiteren kann die erfindungsgemäße Vorrichtung auch im medizinischen oder therapeutischen Bereich angewandt werden. Beispielsweise kann hier ein gezieltes Training der Nacken- und/oder Halsmuskulatur des Trägers durchgeführt werden. Durch die Verlagerung des Massenmittelpunktes des Körpers relativ zur Basiseinheit wird der Kopf in eine bestimmte Richtung gezwungen, wobei der Träger dieser Bewegung entgegenwirken kann und damit die Nacken- und Halsmuskulatur stärkt.

Ferner kann die Vorrichtung auch als eine Art "Sehhilfe" für Blinde und/oder stark sehbehinderte Menschen verwendet werden. In einer Ausgestaltung kann die erfindungsgemäße Vorrichtung den Träger beispielsweise durch den Straßenverkehr führen. In Kombination mit einem System, das die Umgebung aufnimmt und interpretiert und/oder in Kombination mit einem System zur Ermittlung der aktuellen Position (GPS) kann dem Träger durch die Gewichtsverlagerung des Körpers relativ zur Basiseinheit mitgeteilt werden, in welche Richtung er sich zu bewegen hat, oder der Träger kann beispielsweise vor Hindernissen gewarnt werden.

Der erfindungsgemäßen Vorrichtung liegt das Prinzip der Gewichtsverlagerung zugrunde, indem der Massenmittelpunkt eines Körpers relativ zu einer Basiseinheit verlagert wird.

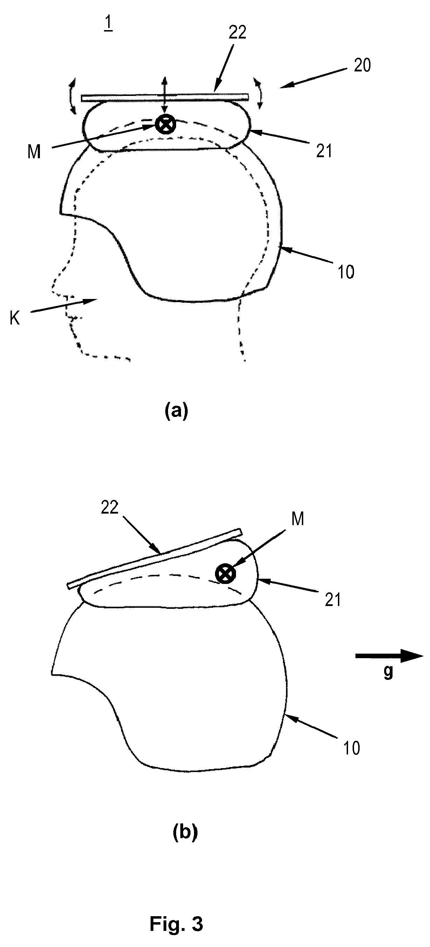

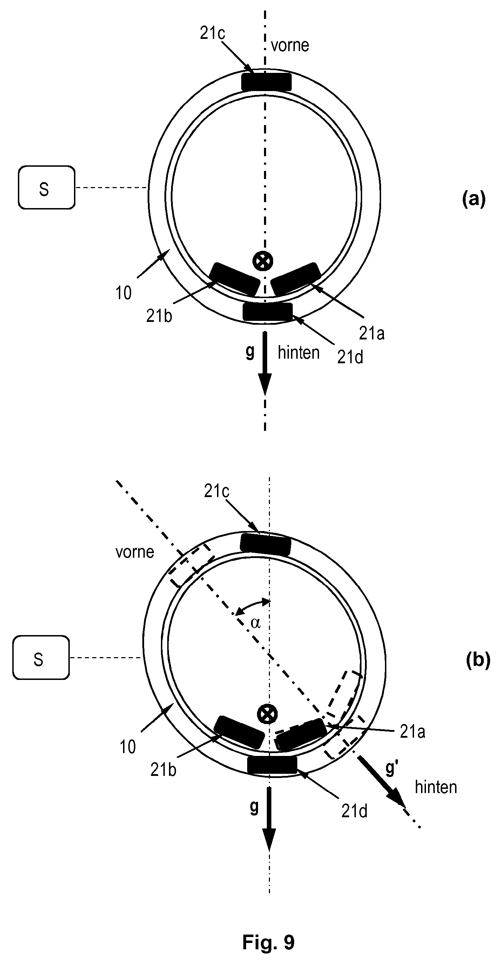

Im Folgenden werden mehrere vorteilhafte Ausgestaltungen der Erfindung näher beschrieben, wobei diese lediglich beispielhaft sind. Die Erfindung umfasst demnach nicht nur die nachfolgend gezeigten Ausgestaltungen der Vorrichtung, sondern sämtliche Vorrichtungen mit einer Basiseinheit, auf der ein Körper angeordnet ist, dessen Massenmittelpunkt in Abhängigkeit des Drehwinkels des Kopfes bzw. der Basiseinheit relativ zur Basiseinheit verlagerbar ist. Mit Bezug auf Fig. 3 bis Fig. 8 wird die Funktionsweise der Gewichtsverlagerung bzw. der Verlagerung des Massenmittelpunktes anhand unterschiedlich ausgestalteter erfindungsgemäßer Vorrichtungen erläutert. Mit Bezug auf Fig. 9 wird die Funktionsweise unter Berücksichtigung des Drehwinkels erläutert.

**Fig. 2** zeigt eine Basiseinheit 10 einer erfindungsgemäßen Vorrichtung zur Simulation von Beschleunigungskräften, wobei die Basiseinheit 10 hier als Helm bzw. als helmartige Haube ausgestaltet ist. In Abbildung (a) ist eine Seitenansicht der Basiseinheit 10 und in Abbildung (b) ist eine Draufsicht des Helmes 10 gezeigt.

Angegeben sind in Fig. 2 die drei Achsen des Helmes 10, d.h. die Längsachse LA, die Querachse QA und die Hochachse bzw. senkrechte Achse HA. Ferner sind in Fig. 2 die vier Richtungen vorne, hinten, links und rechts gezeigt. Sofern in der nachfolgenden Beschreibung auf die Achsen der Basiseinheit und/oder auf die Ausrichtung der Basiseinheit Bezug genommen wird, sind die in Fig. 2 gezeigten Achsen bzw. Ausrichtungen gemeint.

**Fig. 3** zeigt eine erste Ausgestaltung einer erfindungsgemäßen Vorrichtung 1 zur Simulation von Beschleunigungskräften.

Auf bzw. an der Basiseinheit bzw. Helm 10 ist ein Gewichtssystem 20 angeordnet. Das Gewichtssystem besteht aus einem Körper 21 und aus einer Antriebseinheit 22, wobei der Körper 21 hier als ein mit einem Fluid gefülltes Kissen ausgestaltet ist. Die Antriebseinheit 22 ist hier als Platte ausgebildet, die auf dem Kissen 21 aufliegt. Anstelle der Platte kann auch eine teller- oder schüsselförmige Antriebseinheit 22 vorgesehen sein.

In Abbildung (a) ist das Gewichtssystem 20 in einer Neutralstellung gezeigt, bei der die Platte im Wesentlichen waagrecht auf dem Kissen 21 aufliegt, wobei das Kissen 21 über die gesamte Fläche der Platte 22 im Wesentlichen gleichmäßig belastet wird. Das Kissen selbst ist als flexibles Kissen ausgestaltet. Der Massenmittelpunkt M des Kissens 21 in Abbildung (a) befindet sich in etwa kopfmittig oberhalb des Kopfes K.

Die Platte 22 ist so an dem Helm 10 angeordnet, dass sie vorteilhafterweise in jede Richtung geneigt werden kann.

Eine nach vorne geneigte Platte ist in Abbildung (b) gezeigt. Das Neigen der Platte 22 nach vorne bewirkt, dass der vordere Bereich des Kissens 21 mit einer Kraft beaufschlagt wird, während der hintere Bereich des Kissens 21 entlastet wird. Dadurch wird das in dem Kissen 21 aufgenommene Fluid in den hinteren Bereich des Kissens 21 verdrängt, sodass sich auch der Massenmittelpunkt M des Kissens in den Bereich der hinteren Hemisphäre des Kopfes verlagert. Die durch diese Verlagerung des Massemittelpunktes M bzw. die durch diese Gewichtsverlagerung hervorgerufene Beschleunigungskraft bzw. g-Kraft ist durch den Pfeil g gekennzeichnet. Die Größe der g-Kraft hängt von der Beschleunigung bzw. von der Geschwindigkeit ab, mit der die Gewichtsverlagerung bzw. die Verlagerung des Massenmittelpunktes relativ zum Helm 10 vorgenommen wird. Eine schnelle Gewichtsverlagerung hat demzufolge eine höhere g-Kraft zur Folge.

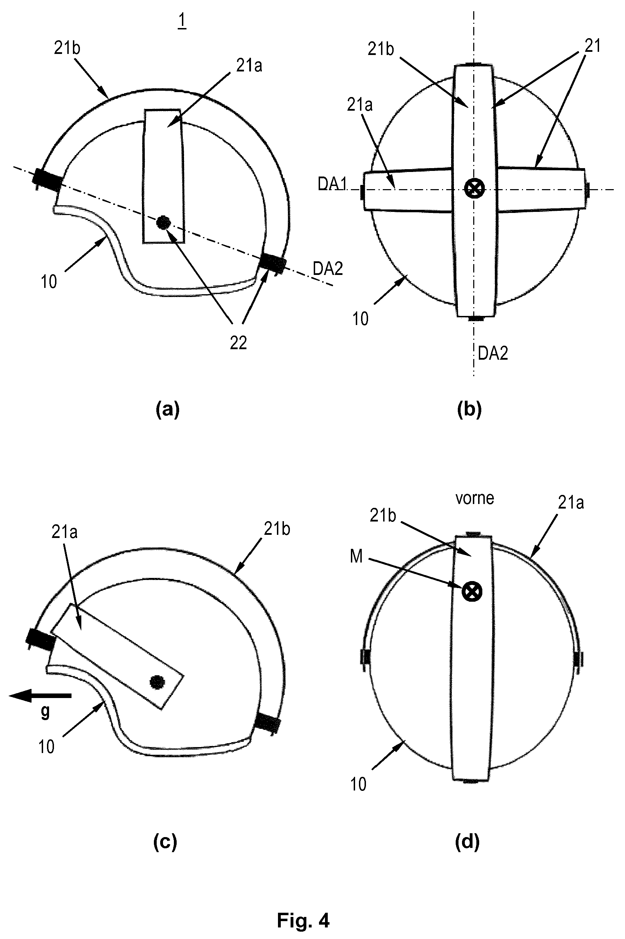

**Fig. 4** zeigt eine weitere alternative Ausgestaltung einer erfindungsgemäßen Vorrichtung zur Simulation von Beschleunigungskräften.

Die Vorrichtung 1 besteht hier aus einer als Helm ausgestalteten Basiseinheit 10 und einem daran angeordneten Gewichtssystem, wobei der Körper 21 des Gewichtssystems aus einem ersten Gewicht 21a und aus einem zweiten Gewicht 21b besteht. Die beiden Gewichte 21a, 21b sind hier als gebogene Bügel ausgestaltet, wobei die Bügel beabstandet zum Helm 10 und außerhalb des Helmes 10 verlaufen. Beide Bügel 21a, 21b sind jeweils um eine Drehachse DA1 und DA2 bewegbar bzw. schwenkbar. Die gedachte Drehachse DA1 des ersten Bügels 21a verläuft hierbei quer durch den Helm 10 und die gedachte Drehachse DA2 des zweiten Bügels 21b verläuft im Wesentlichen senkrecht zur ersten Drehachse DA1. Demgemäß sind die beiden Bügel 21a, 21b so an dem Helm angeordnet, dass der erste Bügel 21a nach vorne und nach hinten und der zweite Bügel 21b nach links und nach rechts geschwenkt werden können.

An den Bügelenden, durch die auch die Drehachsen DA1, DA2 verlaufen, kann jeweils eine Antriebseinheit 22 angeordnet sein, mit der die Drehbewegung des jeweiligen Bügels bewerkstelligt wird. Die Antriebseinheit 22 ist vorteilhafterweise so ausgestaltet, dass die Drehbewegung des Bügels mit einer vorbestimmten Geschwindigkeit bzw. mit einer vorbestimmten Beschleunigung durchgeführt werden kann.

In den Abbildungen (a) und (b) ist die Vorrichtung 1 in einer Neutralstellung gezeigt.

In den Abbildungen (c) und (d) ist der erste, querverlaufende Bügel 21a nach vorne geschwenkt. Das Drehen bzw. Schwenken des Bügels 21a nach vorne bewirkt eine Gewichtsverlagerung in den Bereich der vorderen Hemisphäre des Kopfes bzw. eine Verlagerung des Massenmittelpunktes M der beiden Bügel in diesen Bereich. Während der Bewegung des Bügels 21a nach vorne wirkt auf den Kopf eine nach vorne wirkende Beschleunigungskraft g, dessen Größe von der Geschwindigkeit bzw. von der Beschleunigung der Drehbewegung des ersten Bügels 21a abhängt. Durch diese Drehbewegung des Bügels 21a nach vorne kann eine negative Beschleunigungskraft simuliert werden, die beispielsweise beim Bremsen in einem Fahrzeug auf den Kopf wirkt.

Entsprechend kann der erste Bügel 21a nach hinten geschwenkt werden, um so eine auf den Kopf wirkende Beschleunigungskraft zu simulieren, die entsteht, wenn beispielsweise ein Fahrzeug beschleunigt wird.

In entsprechender Weise kann auch der zweite Bügel 21b nach links oder nach rechts geschwenkt werden, um entsprechende nach links bzw. nach rechts wirkende Beschleunigungskräfte bzw. g-Kräfte zu simulieren.

Ferner können auch beide Bügel 21a, 21b gleichzeitig in eine bestimmte Richtung geschwenkt werden. Damit kann beispielsweise eine Beschleunigungskraft simuliert werden, die auf den Kopf wirkt, wenn in einer Kurve ein Beschleunigungsvorgang durchgeführt wird. Wird beispielsweise ein Beschleunigungsvorgang in einer Linkskurve durchgeführt, wird der erste Bügel 21a nach hinten und der zweite Bügel 21b gleichzeitig nach rechts geschwenkt. Nach dem Schwenkvorgang der beiden Bügel befindet sich der Massenmittelpunkt der beiden Bügel dann im rechten Abschnitt der hinteren Hemisphäre des Kopfes.

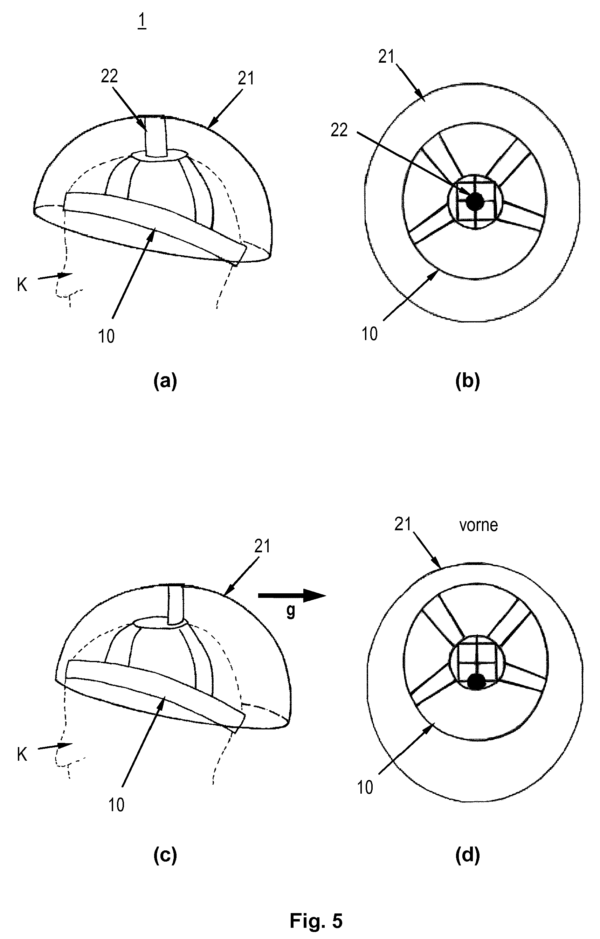

**Fig. 5** zeigt eine weitere Ausgestaltung einer erfindungsgemäßen Vorrichtung.

Die Vorrichtung besteht hier aus einer Basiseinheit 10, die durch eine Art Gestell gebildet wird und auf der Kopfoberfläche des Kopfes K aufliegt. Der Körper des Gewichtssystems wird hier durch eine Haube 21 gebildet, dessen innere Mantelfläche bei einer Neutralstellung der Haube (wie in Abbildung (a) und (b) gezeigt) in radialer Richtung einen vorbestimmten Abstand zur Basiseinheit 10 aufweist. Über eine Antriebseinheit 22 ist die Haube 21 mit der Basiseinheit 10 gekoppelt. Die Antriebseinheit 22 ist hier so ausgestaltet, dass die Haube 21 in radialer Richtung relativ zur Basiseinheit 10 bewegt werden kann. Vorteilhafterweise ist die Antriebseinheit 22 so ausgestaltet, dass die Bewegung der Haube 21 relativ zur Basiseinheit 10 in jede beliebige Richtung durchgeführt werden kann.

In den Abbildungen (c) und (d) ist die Vorrichtung gezeigt, bei der die Haube 21 relativ zur Basiseinheit 10 radial nach hinten verlagert ist. Die während des Verlagerungsvorgangs aus der Neutralstellung in die in Abbildung (c) gezeigte Stellung auf den Kopf K wirkende Beschleunigungskraft ist durch den Pfeil g angegeben.

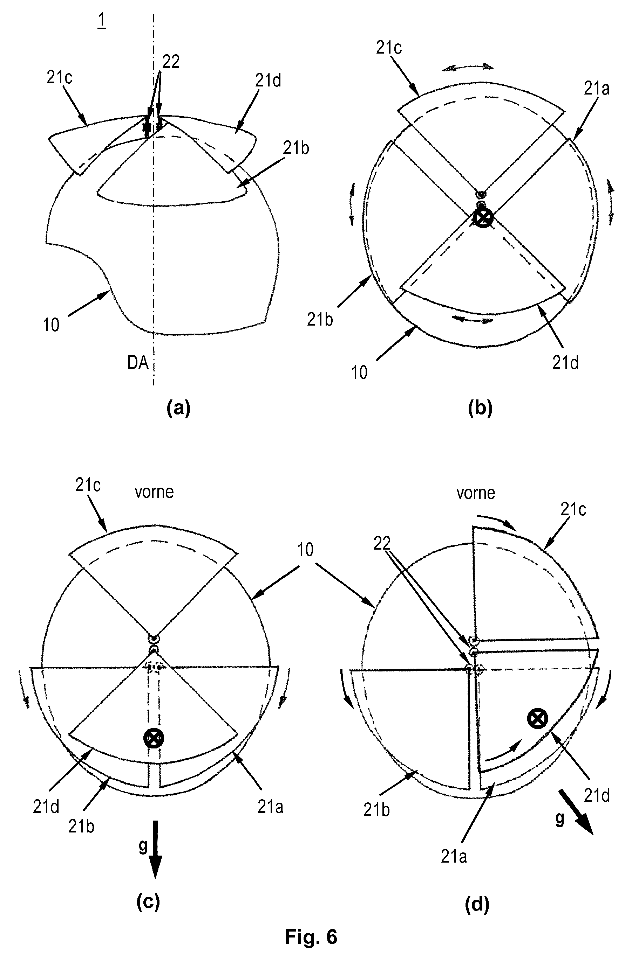

**Fig. 6** zeigt eine noch weitere alternative Ausgestaltung einer erfindungsgemäßen Vorrichtung zur Simulation von Beschleunigungskräften.

An der als Helm ausgestalteten Basiseinheit 10 sind vier Gewichte angeordnet, die hier als sphärische Dreiecke 21a bis 21d ausgestaltet sind und deren Krümmung bzw. Wölbung im Wesentlichen der Wölbung der Helmoberseite entspricht. Die Dreiecke 21a bis 21d sind um eine senkrechte Drehachse DA, die senkrecht durch den Helmmittelpunkt verläuft, drehbar bzw. schwenkbar.

Anstelle der sphärischen Dreiecke 21a bis 21d können auch andere Formen gewählt werden. Sphärischen Dreiecke 21a bis 21d oder andere sphärische Formen haben allerdings hinsichtlich der Integration in einen Helm den Vorteil, dass sie im wesentlichen an die Form des Helmes angepasst sind und so der Platzbedarf minimiert werden kann.

In einer Neutralstellung, wie in Abbildung (a) und (b) gezeigt, sind zwei Dreiecke 21a und 21b zur linken Seite bzw. zur rechten Seite des Helmes 10 hin ausgerichtet. Die beiden anderen Dreiecke 21c und 21d sind zur vorderen bzw. zur hinteren Seite des Helms hin ausgerichtet. Über im Bereich der Drehachse DA angeordnete Antriebseinheiten 22 sind die Dreiecke 21a und 21b nach vorne und nach hinten und die Dreiecke 21c und 21d nach links und nach rechts dreh- bzw. verschwenkbar.

Jedem der Dreiecke kann eine eigene Antriebseinheit zugeordnet sein. Die Antriebseinheiten 22 können so ausgestaltet sein, dass jedes der Dreiecke 21a bis 21d unabhängig voneinander bewegt werden kann.

Vorteilhaft ist es allerdings, wenn die beiden nach links und nach rechts ausgerichteten Dreiecke 21a und 21b und die beiden nach vorne und nach hinten ausgerichteten Dreiecke 21c und 21d jeweils gleichzeitig mit der gleichen Geschwindigkeit und mit der gleichen Beschleunigung nach vorne oder nach hinten bzw. nach links oder nach rechts bewegt werden. Damit wird das auf den Kopf des Trägers wirkende Drehmoment beim Bewegen der Dreiecke minimiert. Um das gleichzeitige Bewegen der beiden nach links und nach rechts ausgerichteten Dreiecke 21a, 21b und der beiden nach vorne und nach hinten ausgerichteten Dreiecke 21c, 21d zu gewährleisten, kann beispielsweise für die Dreiecke 21a und 21b eine erste Antriebseinheit und für die Dreiecke 21c und 21d eine zweite Antriebseinheit vorgesehen sein, wobei die jeweilige Antriebseinheit die jeweiligen Dreiecke in die gleiche Richtung und mit der gleichen Winkelgeschwindigkeit und Beschleunigung bewegt. Als Antriebseinheiten können beispielsweise Servomotoren vorgesehen sein, wobei die jeweils anzutreibenden Dreiecke über Zahnräder miteinander gekoppelt sein können. Die Verwendung von Servomotoren hat den Vorteil, dass die Dreiecke mit einer vorbestimmten Winkelgeschwindigkeit und Beschleunigung in eine bestimmte Winkelposition relativ zur Neutralstellung bewegt werden können.

In einer konkreten Ausführung kann beispielsweise ein erster Servomotor vorgesehen sein, mit dem das linke und das rechte Dreieck 21a, 21b gleichzeitig, mit der gleichen Geschwindigkeit und mit der gleichen Beschleunigung nach vorne und nach hinten bewegt werden.

Abbildung (c) zeigt die Vorrichtung, bei der sich die beiden nach vorne und nach hinten ausgerichteten Dreiecke 21c und 21d in einer Neutralstellung befinden und bei der die beiden sich in der Neutralstellung nach links und nach rechts ausgerichteten Dreiecke 21a und 21b nach hinten geschwenkt wurden. Der Massenmittelpunkt der vier Dreiecke befindet sich demnach mittig im Bereich der hinteren Hemisphäre des Kopfes. Die Bewegung der beiden Dreiecke 21a und 21b nach hinten bewirkt eine nach hinten wirkende Beschleunigungskraft g, die beispielsweise bei einem Beschleunigungsvorgang eines Fahrzeuges auftritt.

In Abbildung (d) sind die in der Neutralstellung nach links und nach rechts ausgerichteten Dreiecke 21a und 21b nach hinten geschwenkt worden. Die beiden in der Neutralstellung nach vorne und nach hinten ausgerichteten Dreiecke 21c und 21d sind nach rechts geschwenkt worden. Der Massenmittelpunkt der vier Dreiecke 21a bis 21 d befindet sich demnach im Bereich des rechten Abschnittes der hinteren Hemisphäre des Kopfes. Die Bewegung der vier Dreiecke aus der Neutralstellung in die in Abbildung (d) gezeigte Stellung bewirkt eine auf den Kopf wirkende Beschleunigungskraft g, die beispielsweise bei einem Beschleunigungsvorgang in einer Linkskurve auf den Kopf wirkt.

Die Dreiecke 21a bis 21d können so ausgestaltet sein, dass sich der Großteil der Masse der Dreiecke jeweils in dem Bereich befindet, der am weitesten von der Drehachse DA entfernt ist. In einer Ausgestaltung der Erfindung können die Dreiecke jeweils ein Gewicht von zwischen 100 und 500g, vorzugsweise zwischen 150 und 300g, aufweisen.

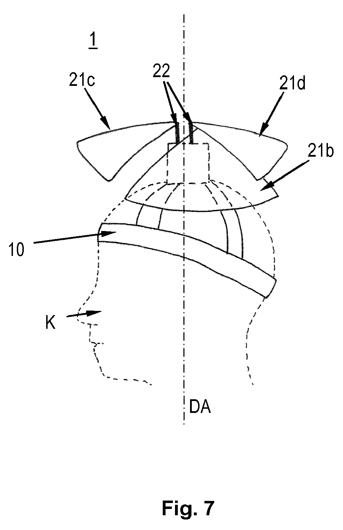

**Fig. 7** zeigt eine alternative Ausgestaltung der in Fig. 6 gezeigten Vorrichtung. Im Unterschied zu der in Fig. 6 gezeigten Vorrichtung sind hier die Dreiecke 21a bis 21d nicht auf einem Helm, sondern auf einem an der Kopfoberfläche anliegenden Gestell angeordnet. Die Funktionsweise ist identisch zu der mit Bezug auf Fig. 6 beschriebenen Funktionsweise.

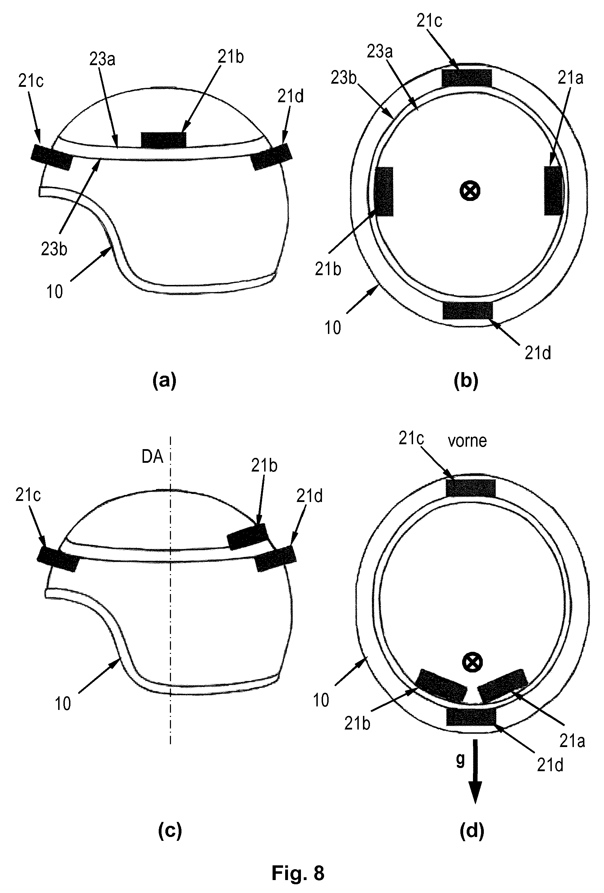

**Fig. 8** zeigt eine weitere erfindungsgemäße Ausgestaltung einer Vorrichtung zur Simulation von Beschleunigungskräften.

An der Basiseinheit bzw. an dem Helm 10 sind vier Gewichte 21a bis 21d angeordnet, die hier eine quaderförmige Grundform aufweisen. In der Neutralstellung, wie in Abbildung (a) und (b) gezeigt, sind jeweils zwei Gewichte 21a, 21b links und rechts am Helm 10 und jeweils zwei Gewichte 21c, 21d vorne und hinten am Helm 10 angeordnet. Das linke und das rechte Gewicht 21a, 21b sind hierbei nach vorne und nach hinten entlang einer ersten Schiene 23a bewegbar. Das vordere und das hintere Gewicht 21c und 21d sind entlang einer zweiten Schiene 23b nach links und nach rechts bewegbar.

Die Gewichte 21a bis 21d, wie auch die Dreiecke 21a bis 21d der in Fig. 6 und Fig. 7 gezeigten Vorrichtung, sind aus ihrer Neutralstellung jeweils maximal 90° nach vorne und nach hinten bzw. 90° nach links und nach rechts bewegbar. Der jeweilige Drehwinkel kann auch größer als 90° sein, wenn sich Gewichte bzw. Dreiecke auf unterschiedlichen Bahnen bewegen und während eine Gewichtsverlagerung nicht aneinander stoßen.

Für das Bewegen der Körper 21a bis 21d auf den Schienen 23a bzw. 23b können jeweils an sich bekannte Antriebseinheiten vorgesehen sein.

Die Abbildungen (c) und (d) zeigen die Vorrichtung, bei der die in der Neutralstellung nach links und nach rechts ausgerichteten Gewichte 21a und 21b nach hinten bewegt wurden, sodass sich der Massenmittelpunkt der Gewichte 21a bis 21d mittig im Bereich der hinteren Hemisphäre des Kopfes befindet. Das Bewegen der beiden linken und rechten Gewichte nach hinten bewirkt eine nach hinten wirkende Beschleunigungskraft g, die beispielsweise bei einem Beschleunigungsvorgang eines Fahrzeuges auf den Kopf des Fahrers wirkt.

**Fig. 9** zeigt eine Ausgestaltung einer erfindungsgemäßen Vorrichtung zur Verdeutlichung der Funktionsweise der erfindungsgemäßen Vorrichtung, bei der der Drehwinkel des Kopfes bzw. der Basiseinheit berücksichtigt wird.

Die in Fig. 9 gezeigte erfindungsgemäß Vorrichtung weist eine Sensoreinrichtung S auf, mit der Drehwinkel α des Kopfes bzw. der Basiseinheit 10 relativ zu einer Normalposition des Kopfes bzw. der Basiseinheit detektiert wird. Eine solche Sensoreinrichtung weisen auch die in Fig. 3 bis Fig. 8 gezeigten erfindungsgemäßen Vorrichtungen auf.

In Abbildung (a) der Fig. 9 ist die in Fig. 8 gezeigte erfindungsgemäße Vorrichtung gezeigt, bei der sich die Basiseinheit in einer Normalposition befindet, d.h. der Drehwinkel der Basiseinheit ist 0°.

In Abbildung (b) der Fig. 9 ist die Basiseinheit nach links gedreht, d.h. der Drehwinkel α der Basiseinheit relativ zur Basiseinheit in der Normalposition ist verschieden von 0°.

In Abbildung (a) sind die beiden linken und rechten Gewichte nach hinten verlagert worden, was eine nach hinten wirkende Beschleunigungskraft g bewirkt, die beispielsweise bei einem geradlinigen Beschleunigungsvorgang eines Fahrzeuges auf den Kopf des Fahrers wirkt, wenn der Fahrer nach vorne blickt bzw. wenn der Kopf des Fahrers nach vor hin ausgerichtet ist.

Soll allerdings eine geradlinige Beschleunigungskraft g simuliert werden, während der Fahrer den Kopf nach links dreht, wie in Abbildung (b) gezeigt, würden ohne Berücksichtigung des Drehwinkels α die vier Gewichte 21 a, 21b, 21c und 21 d relativ zur Basiseinheit 10 die gleiche Position einnehmen, wie in Abbildung (a) gezeigt. Die Gewichte in dieser Position sind in Abbildung (b) gestrichelt wiedergegeben. Die Verlagerung der Gewichte in diese (gestrichelte) Position hat zur Folge, dass damit zwar eine Beschleunigungskraft simuliert wird, dessen Kraftvektor aber in die falsche Richtung zeigt (in Abbildung (b) durch den Pfeil g' angegeben).

Wird hingegen beim Verlagern der Gewichte der Drehwinkel α der Basiseinheit 10 bzw. des Kopfes berücksichtigt, kann die Verlagerung der Gewichte um diesen Drehwinkel α korrigiert werden, sodass aufgrund der Verlagerung der Gewichte eine Beschleunigungskraft simuliert wird, dessen Kraftvektor in die korrekte Richtung zeigt (in Abbildung (b) durch den Pfeil g angegeben). Eine Simulation, beispielsweise eines Autorennens, kann so noch realistischer gestaltet werden.

Die Information über den Drehwinkel des Kopfes kann beispielsweise von einer VR-Brille zur Verfügung gestellt werden, die der Fahrer während der Fahrt am Kopf angelegt hat. Andere Sensoreinrichtungen können jedoch auch verwendet werden.

Bei der in Fig. 9 gezeigten Ausgestaltung der erfindungsgemäßen Vorrichtung sind die Gewichte entlang der beiden Schienen beliebig bewegbar, sodass auch bei einem gedrehten Kopf bzw. bei einer gedrehten Basiseinheit 10 der Massenmittelpunkt der vier Gewichte in jede beliebige Richtung verschoben werden kann.

Können hingegen bei einem gedrehten Kopf bzw. bei einer gedrehten Basiseinheit die Körper bzw. die Gewichte des Gewichtssystems nicht oder nicht mehr so relativ zur Basiseinheit bewegt werden, dass die gewünschte Verlagerung des Massenmittpunktes erreicht wird, ist es vorgesehen, das an der Basiseinheit 10 angeordnete Gewichtssystem relativ zur Basiseinheit zu drehen, vorzugsweise um die in Fig. 2 gezeigte Hochachse HA. Damit kann ein Teil des Drehwinkels α bereits durch Drehen des Gewichtssystems relativ zur Basiseinheit korrigiert werden. Der Rest des Drehwinkels α wird dann durch die Verlagerung der Gewichte korrigiert, indem dieser Rest des Drehwinkels bei der Verlagerung der Gewichte relativ zur Basiseinheit berücksichtigt wird. Das bedeutet, dass das Gewichtssystem soweit relativ zur Basiseinheit gedreht wird, dass der Rest des Drehwinkels ausreicht, um die gewünschte Verlagerung des Massenmittpunktes zu erreichen. Beträgt beispielsweise der Drehwinkel α, um den der Kopf beispielsweise nach links gedreht wird, 45° und kann durch die Verlagerung des Massenmittpunktes der Körper nur ein Drehwinkel von maximal 30° ausgeglichen werden, ist es vorteilhaft, das Gewichtssystems ebenfalls um 15° relativ zu Basiseinheit zu drehen.

Können beispielsweise bei der in Fig. 6 gezeigten Ausgestaltung der erfindungsgemäßen Vorrichtung die dort gezeigten Gewichte bzw. Körper 21a bis 21d jeweils nur um einen maximalen Winkel von 90° um die Achse der jeweiligen Antriebseinheit 22 gedreht werden, kann es bei bestimmten Drehwinkeln bzw. Drehwinkelbereichen, um den der Kopf oder die Basiseinheit relativ zu einer Normalposition des Kopfes oder der Basiseinheit gedreht wurde, vorkommen, dass die erforderliche Position des Massenmittelpunktes relativ zur Basiseinheit für eine korrekte Simulation der Beschleunigungskraft nicht erreicht wird bzw. nicht eingenommen werden kann. Dies kann etwa dann der Fall sein, wenn einer der Körper 21a bis 21d um mehr als 90° um die Achse seiner Antriebseinheit 22 gedreht werden müsste. Um dies Auszugleichen wird das gesamte Gewichtssystem ebenfalls um einen bestimmten Winkel relativ zur Basiseinheit gedreht. Entsprechendes gilt auch für die in Fig. 7 gezeigte Ausgestaltung der erfindungsgemäßen Vorrichtung.

Die vorstehend genannten mit Bezug auf Fig. 3 bis Fig. 9 gezeigten Ausführungsformen der erfindungsgemäßen Vorrichtung zur Simulation von Beschleunigungskräften sind lediglich Beispiele einer erfindungsgemäßen Vorrichtung. Sämtliche Vorrichtungen, die auf dem erfindungsgemäßen Prinzip der Gewichtsverlagerung eines Körpers eines Gewichtssystems, das auf einer Basiseinheit angeordnet ist, relativ zur Basiseinheit basieren, sind von der vorliegenden Erfindung ebenfalls umfasst, auch wenn sie in den vorstehenden Beispielen nicht erwähnt wurden. Beispielsweise können an einer Basiseinheit vier Kissen angeordnet sein, wobei sich zwei Kissen links und rechts an der Basiseinheit und zwei Kissen vorne und hinten an der Basiseinheit befinden und wobei die vier Kissen über Kanäle miteinander verbunden sind und wobei sich in den Kissen ein Fluid befindet, das mit Hilfe einer Pumpe als Antriebseinheit von einem Kissen in ein oder mehrere andere Kissen gepumpt werden kann, um so den Massenmittelpunkt der vier Kissen relativ zur Basiseinheit zu verlagern. Zudem können die Körper bzw. Gewichte des Gewichtssystems unterschiedliche Formen aufweisen.

Die erfindungsgemäße Vorrichtung kann vorteilhafter Weise in einen herkömmlichen Helm, etwa Motorrad- oder Rennsporthelm integriert werden. Anstelle der in dem Helm vorgesehenen Schaumstoffpolsterung wird die erfindungsgemäße Vorrichtung in dem Helm angeordnet und vorzugswiese mit der Außenschale des Helmes verbunden. Das Gewichtssystem ist so in dem Zwischenraum zwischen der Basiseinheit und der Außenschale des Helmes angeordnet, sodass sich die Körper des Gewichtssystems in diesem Zwischenraum relativ zur Basiseinheit bewegen lassen. Äußerlich ist damit die erfindungsgemäße Vorrichtung nahezu nicht von einem herkömmlichen Motorrad- oder Rennsporthelm zu unterscheiden.

Ferner ist es vorteilhaft, wenn das Gewichtssystem so ausgestaltet ist, dass die Körper des Gewichtssystems ausgetauscht oder erweitert werden können. Dadurch können beispielsweise Körper mit verschiedenen Massen an der erfindungsgemäßen Vorrichtung angebracht werden. Für junge Computerspieler können etwa leichtere Körper angebracht werden, während für erwachsene Computerspieler schwererer Körper angebracht werden können.

Ferner ist es vorteilhaft, die Vorrichtung modular aufzubauen, wobei ein erstes Modul die Basiseinheit und ein zweites Modul das Gewichtssystem bilden. Das Gewichtssystem und die Basiseinheit sind vorteilhafterweise so ausgestaltet, dass das Gewichtssystem lösbar an der Basiseinheit anordenbar ist.

### Bezugszeichen:

- 1: Vorrichtung zur Simulation von Beschleunigungskräften
- 10: Basiseinheit (z.B. Helm)
- 11: Zugelemente oder hydraulische Elemente (Stand der Technik)
- 20: Gewichtssystem
- 21: Körper des Gewichtssystems 20, z.B. ein oder mehrere relativ zur Basiseinheit 10 verlagerbare bzw. bewegbare Gewichte
- 21a: erstes Gewicht des Körpers 21
- 21b: zweites Gewicht des Körpers 21
- 21c: drittes Gewicht des Körpers 21
- 21d: viertes Gewicht des Körpers 21
- 22: Antriebseinheit des Gewichtssystems 20
- 23a: erste Schiene
- 23b: zweite Schiene
- DA: Drehachse, die im Wesentlichen senkrecht zur Basiseinheit 10 verläuft
- DA1: erste Drehachse parallel zur Querachse der Basiseinheit 10
- DA2: zweite Drehachse parallel zur Längsachse der Basiseinheit 10
- g: Beschleunigungskraft bzw. g-Kraft
- K: Kopf
- M: Massenmittelpunkt des Körpers 21
- S: Sensoreinrichtung
- α: Drehwinkel des Kopfes

- Achsen der Basiseinheit: 10
- HA: Hochachse bzw. senkreche Achse der Basiseinheit 10
- LA: Längsachse der Basiseinheit 10
- QA: Querachse der Basiseinheit 10

## Patentansprüche

1. Vorrichtung (1) zur Simulation von am menschlichen Kopf (K) wirkenden Beschleunigungskräften (g), wobei die Vorrichtung (1) aufweist
- eine Basiseinheit (10), die am Kopf (K) anordenbar ist,
- ein Gewichtssystem (20), das an der Basiseinheit (10) angeordnet ist, und
- eine Sensoreinrichtung (S), die angepasst ist einen Drehwinkel (α) des Kopfes (K) oder der Basiseinheit (10) relativ zu einer Normalposition des Kopfes oder der Basiseinheit zu detektieren,
wobei das Gewichtssystem (20) einen Körper (21) aufweist, der in Abhängigkeit des Drehwinkels (α) relativ zur Basiseinheit (10) verlagerbar ist.

2. Vorrichtung nach dem vorhergehenden Anspruch, wobei das Gewichtssystem (20) zumindest eine Antriebseinheit (22) aufweist, die mit dem Körper (21) gekoppelt ist und die angepasst ist, den Körper (21) in Abhängigkeit des Drehwinkels (α) relativ zur Basiseinheit (10) zu verlagern, wobei durch das Verlagern des Körpers (21) relativ zur Basiseinheit (10) vorzugsweise der Massenmittelpunkt (M) des Körpers (21) relativ zur Basiseinheit (10) verlagerbar ist.

3. Vorrichtung nach dem vorhergehenden Anspruch, wobei die zumindest eine Antriebseinheit (22) angepasst ist, den Massenmittelpunkt (M) des Körpers (21) mit einer vorbestimmten Geschwindigkeit und/oder Beschleunigung relativ zur Basiseinheit (10) zu verlagern.

4. Vorrichtung nach einem der vorhergehenden Ansprüche, wobei das Gewichtssystem (20) in Abhängigkeit des Drehwinkels (α) relativ zur Basiseinheit (10) drehbar ist.

5. Vorrichtung nach einem der vorhergehenden Ansprüche, wobei die Basiseinheit (10) als Helm oder als ein an der Kopfoberfläche anliegendes Gestell ausgestaltet ist.

6. Vorrichtung nach einem der vorhergehenden Ansprüche, wobei der Körper (21) ein erstes Gewicht (21a) und ein zweites Gewicht (21b) aufweist, wobei das erste Gewicht (21a) und das zweite Gewicht (21b) unabhängig voneinander relativ zur Basiseinheit (10) verlagerbar sind.

7. Vorrichtung nach dem vorhergehenden Anspruch, wobei das erste und das zweite Gewicht (21a; 21b) jeweils als Bügel, vorzugsweise gebogene Bügel, ausgestaltet sind, die beabstandet zur Basiseinheit (10) außerhalb der Basiseinheit verlaufen, wobei die Bügel jeweils um eine Drehachse (DA1; DA2) relativ zur Basiseinheit (10) bewegbar sind, wobei die Drehachsen jeweils durch die Bügelenden verlaufen und wobei die Drehachse (DA1) des ersten Bügels (21a) parallel zur Querachse der Basiseinheit (10) und die Drehachse (DA2) des zweiten Bügels (21b) parallel zur Längsachse der Basiseinheit (10) verlaufen.

8. Vorrichtung nach Anspruch 6, wobei der Körper (21) zusätzlich ein drittes Gewicht (21c) und ein viertes Gewicht (21d) aufweist, wobei die vier Gewichte (21a; 21b; 21c; 21d), vorzugsweise unabhängig voneinander, relativ zur Basiseinheit (10) verlagerbar sind.

9. Vorrichtung nach dem vorhergehenden Anspruch, wobei jedes der vier Gewichte (21a; 21b; 21c; 21d) um eine im Wesentlichen senkrecht zur Basiseinheit (10) stehenden Drehachse (DA) relativ zur Basiseinheit (10) bewegbar ist, wobei
- in einer Neutralstellung das erste Gewichte (21a) links von der Drehachse (DA) und das zweite Gewicht (21b) rechts von der Drehachse (DA) angeordnet sind und das erste und zweite Gewicht (21a; 21b) um die Drehachse (DA) gleichzeitig nach vorne oder nach hinten bewegbar sind, und
- in einer Neutralstellung das dritte Gewichte (21c) vor der Drehachse (DA) und das vierte Gewicht (21d) hinter der Drehachse (DA) angeordnet sind und das dritte und vierte Gewicht (21c; 21d) um die Drehachse (DA) gleichzeitig nach links oder nach rechts bewegbar sind.

10. Vorrichtung nach einem der beiden vorhergehenden Ansprüche, wobei die vier Gewichte (21a; 21b; 21c; 21d) jeweils die Form eines sphärischen Dreiecks aufweisen, wobei ein Eckpunkt des sphärischen Dreiecks die Drehachse bildet.

11. Vorrichtung nach einem der Ansprüche 8 oder 9, wobei die vier Gewichte (21a; 21b; 21c; 21d) jeweils eine vorzugsweise quader- oder zylinder oder halbkugelförmige Form aufweisen und wobei das erste und zweite Gewicht (21a; 21b) entlang einer ersten Schiene (23a) und das dritte und vierte Gewicht (21c; 21d) entlang einer zweiten Schiene (23b) bewegbar sind.

12. Vorrichtung nach einem der Ansprüche 1 bis 5, wobei der Körper (21) die Form einer Haube aufweist, dessen innere Mantelfläche bei einer Neutralstellung der Haube in radialer Richtung einen vorbestimmten Abstand zur Basiseinheit (10) aufweist und innerhalb dieses Abstandes in radialer Richtung relativ zur Basiseinheit (10) bewegbar ist.

13. Vorrichtung nach einem der Ansprüche 1 bis 5, wobei der Körper (21) ein mit einem Fluid gefülltes flexibles Kissen aufweist, das derart ausgestaltet ist, dass eine Krafteinwirkung auf die Wandung des Kissens eine Verformung des Kissens und damit eine Verlagerung des Massenmittelpunktes (M) des Kissens relativ zur Basiseinheit (10) bewirkt.

14. Vorrichtung nach einem der vorhergehenden Ansprüche 2 bis 13, wobei die Vorrichtung (1) eine drahtlose oder drahtgebundene Schnittstelle und eine mit der Schnittstelle gekoppelte Steuereinheit aufweist, wobei die Steuereinheit angepasst ist, über die Schnittstelle Steuerbefehle zu empfangen und gemäß der empfangenen Steuerbefehle die Antriebseinheit (22) zu steuern.

15. Gewichtssystem (20), wobei das Gewichtssystem (20) einen Körper (21) und eine Antriebseinheit (22) aufweist, wobei das Gewichtssystem (20) angepasst ist, an einer Basiseinheit (10), vorzugsweise lösbar angeordnet zu werden, und wobei die Antriebseinheit (22) angepasst ist, den Körper, insbesondere den Massenmittelpunkt des Körpers, in Abhängigkeit eines Drehwinkels (α) der Basiseinheit (10) relativ zu einer Normalposition der Basiseinheit relativ zur Basiseinheit (10) zu verlagern.

16. Verfahren zur Simulation von am menschlichen Kopf (K) wirkenden Beschleunigungskräften (g), wobei ein Körper (21), insbesondere der Massenmittelpunkt (M) des Körpers (21), eines Gewichtssystems (20), das an einer Basiseinheit (10), die am Kopf (K) anordenbar ist, angeordnet ist, in Abhängigkeit eines Drehwinkels (α) der Basiseinheit (10) oder des Kopfes (K) relativ zu einer Normalposition der Basiseinheit oder des Kopfes relativ zur Basiseinheit (10) verlagert wird.

17. Verfahren nach dem vorhergehenden Anspruch, wobei die Verlagerung des Massenmittelpunktes (M) des Körpers (21) relativ zur Basiseinheit (10) mit einer Antriebseinheit (22) erfolgt, die mit dem Körper (21) gekoppelt ist, wobei mit der Antriebseinheit ein oder mehrere Gewichte des Körpers (21) relativ zur Basiseinheit, vorzugsweise um eine oder mehrere Drehachsen bewegt werden.

18. Verfahren nach einem der beiden vorhergehenden Ansprüche, wobei in Abhängigkeit des Drehwinkels (α) das Gewichtssystem (20) relativ zur Basiseinheit (10) gedreht wird.
